# EUROPÄISCHE PATENTSCHRIFT

(11) **EP 3 542 010 B1**
(45) Veröffentlichungstag und Bekanntmachung des Hinweises auf die Patenterteilung: **29.11.2023**
(21) Anmeldenummer: 17818419.8
(22) Anmeldetag: 02.11.2017
(51) Int. Cl.: E04C 5/01, E04C 5/03, E04C 5/07

(54) **PROFILIERTE METALLFASER**
PROFILED METAL FIBRE
FIBRE MÉTALLIQUE PROFILÉE

(30) Priorität: 15.11.2016 DE 102016013615; 04.07.2017 DE 102017006298
(43) Veröffentlichungstag der Anmeldung: 25.09.2019
(73) Patentinhaber: Hacanoka GmbH, 89269 Vöhringen (DE)
(72) Erfinder: STAHL, Karl-Hermann, 89269 Vöhringen (DE)
(74) Vertreter: Baur & Weber Patentanwälte PartG mbB
(86) Internationale Anmeldenummer: PCT/DE2017/000364
(87) Internationale Veröffentlichungsnummer: WO 2018/091005

(56) Entgegenhaltungen:
- DE-A1-102009 037 643
- GB-A- 882 701
- JP-A- 2001 220 190
- US-A- 1 400 278
- US-A- 5 548 986

## Beschreibung

Die Erfindung betrifft eine profilierte Metallfaser, gemäß Anspruch 1, mit rechteckigem Querschnitt, auch mit abgewinkelten Faserenden in Form einer Klammer, zur Stabilisierung, Verfestigung, Befestigung oder Verbindung von Materialien und Baustoffen wie Beton, Holz, Papier und dergleichen, insbesondere aus Stahl, bei welcher die in Faserlängsrichtung verlaufenden Faserkanten der Faseraußenflächen in der Art einer Fase als schräg zu den Faseraußenflächen ausgerichtete Kantflächen ausgebildet sind.

Eine derartige Metallfaser ist beispielsweise bekannt geworden aus der DE 10 2009 048 751. Sie sind dank ihrer gegenüber dem damaligen Stand der Technik vergleichsweise wesentlich besseren Eigenschaften für vielfältige Anwendungen prädestiniert. Aufgrund der üblicherweise in Betracht kommenden geometrischen Abmessungen werden jedoch hohe Anforderungen insbesondere an die bei der Herstellung zur Anwendung kommenden Werkzeuge gestellt.

Aus der US1 400 278 A ist ein Verstärkungsstab mit geraden, in Längsrichtung verlaufenden, entgegengesetzt angeordneten Erweiterungen bekannt, die eine Vielzahl von Mulden darin bilden, wobei die Außenkanten der entgegengesetzt angeordneten Erweiterungen in der gleichen horizontalen Ebene liegen, und mit durchgehenden, sich quer erstreckenden Verbindungsrippen, die in den Mulden angeordnet sind, wobei die Rippen eine geringere Höhe als die Erweiterungen haben, wobei die äußeren Abschnitte der Erweiterungen und Rippen allmählich in ihrer Dicke reduziert sind, wodurch der Stab leicht von den Walzen gelöst werden kann.

Aus der GB 882701 A ist ein Bewehrungsstab bekannt, wobei die Zwischenpunkte senkrecht zur Achse x-x beliebig sind und ihr Weglassen eine Sechseckform ergibt. Diese Sechseckform kann wiederum durch das Anbringen von Zwischenpunkten verändert werden, so dass der Stab 12 Punkte hat. Die Flanken stehen in einem Winkel von 90 Grad oder 30 Grad zu den Achsen des Rückens.

Dokument JP 2001 220190 A offenbart ein Profilierte Metallfaser mit rechteckigem Querschnitt, auch mit abgewinkelten Faserenden in Form einer Klammer, zur Stabilisierung, Verfestigung, Befestigung oder Verbindung von Materialien und Baustoffen wie Beton, insbesondere aus Stahl, bei welcher die in Faserlängsrichtung verlaufenden Faserkanten der Faseraußenflächen in der Art einer Fase als schräg zu den Faseraußenflächen ausgerichtete Kantflächen ausgebildet sind.

Der vorliegenden Erfindung liegt daher die Aufgabe zugrunde, eine Metallfaser der eingangs genannten Art dahingehend weiter zu entwickeln, das sie bei unverändert guten oder sogar verbesserten Eigenschaften in der Anwendung zugleich geringere Anforderungen an die bei der Herstellung benötigten maschinellen Vorrichtungen stellt.

Diese Aufgabe wird nach der Erfindung dadurch gelöst, dass die beiden breiteren Faseraußenflächen der rechteckigen Faser mit in Längsrichtung verlaufenden V-förmigen Rillen versehen sind, wobei die Kantflächen mit Vorsprüngen und die V-förmigen Rillen mit ihre Längsausdehnung begrenzenden Endzonen versehen sind, und wobei die Vorsprünge Verankerungsköpfe und die Endzonen Ankerflächen gegenüber den zu stabilisierenden, verfestigenden bzw. befestigenden Materialien bilden.

Der durch die Erfindung erreichte Vorteil besteht im Wesentlichen darin, dass zunächst aufgrund der rechteckigen Gestalt der Metallfasern die Bedingungen beim Kerben, Walken sowie beim anschließenden Längstrennen der Metallfaseradern deutlich verbessert werden, wodurch geringere Anforderungen an die Werkzeuge gestellt werden können. Die in den Fasern angebrachten Kerben erleichtern bei richtiger Auslegung und Positionierung das Führen von Oberwalze zu Unterwalze, weil das Auftreten der Axialkräfte, die auf die Führung der Werkzeuge wirken, reduziert werden. Schließlich schaffen die V-förmigen Rillen eine zusätzliche Verankerungsmöglichkeit, indem ihre Endzonen jeweils Ankerflächen bilden.

Insbesondere wird der Walkprozess wesentlich gleichmäßiger und sicherer, zusätzlich ergeben sich weitere Vorteile bezüglich der Werkzeugauslegung für die Längsteileinheit und die Produktionsstabilität. Eine Folge hiervon sind kurze Umbauzeiten, höhere Werkzeugstandzeiten sowie eine gleichmäßigere Faserqualität.

Erfindungsgemäß ist vorgesehen, dass die eine der breiteren Faseraußenflächen eine V-förmige Rille und die ihr gegenüberliegende Faseraußenfläche wenigstens zwei V-förmige Rillen gleicher Größe aufweist. Diese Kombination und Anordnung der Rillen hat sich im Rahmen der Erfindung als besonders vorteilhaft erwiesen.

Erfindungsgemäß ist die einzelne V-förmige Rille auf der breiten Faseraußenfläche mittig zur Fläche angeordnet.

In alternativer Ausgestaltung der Erfindung, die nicht Teil des beanspruchten Gegenstandes ist, besteht jedoch auch die ebenso vorteilhafte Möglichkeit, dass beide breiteren Faseraußenflächen eine V-förmige Rille aufweisen, die sich gegenüberliegen und gleiche Größe besitzen sowie mittig zur Fläche angeordnet sind.

In weiter bevorzugter Ausgestaltung der Erfindung ist vorgesehen, dass die Tiefe der V-förmigen Rillen im Bereich von 25 % bis 40 % der Metallfaserdicke liegt.

Des Weiteren ist es von Vorteil, wenn die die V-förmigen Rillen endseitig begrenzenden Ankerflächen eine feste, durch die Querschnittsform und Tiefe der V-förmigen Rille bestimmte Größe aufweisen.

Das Seitenverhältnis der Metallfasern kann in relativ großem Rahmen variieren; als vorteilhaft hat sich jedoch herausgestellt, wenn das Breitenmaß zum Dickenmaß der Metallfaser im Bereich von 4:1 und 1,5:1 liegt. Hierbei hat sich insbesondere ein bevorzugtes Seitenverhältnis derart ergeben, dass das Breitenmaß zum Dickenmaß der Metallfaser bei etwa 2:1 liegt.

Weiter kann im Rahmen der Erfindung vorgesehen sein, dass die von den Vorsprüngen gebildeten Verankerungsköpfe und die von den Endzonen gebildeten Ankerflächen in einer gemeinsamen, senkrecht zur Längsrichtung der Faser verlaufenden Ankerlinie liegen.

Dabei kann, je nach Anforderung an die gewünschten Eigenschaften, jede Faser ein oder mehrere, bevorzugt endseitig angeordnete Ankerlinien aufweisen.

Des Weiteren umfasst die Erfindung ein Verfahren gemäß Anspruch 8 zur Herstellung von profilierten Metallfasern nach den vorstehend genannten und im Einzelnen in der DE 10 2008 034 250 beschriebenen Merkmalen, bei welchen zunächst ein Blechband zur Formung der Metallfasern beidseitig gegenüberliegend gekerbt wird, wodurch Metallfaseradern ausgebildet werden, die zunächst noch durch Stege miteinander verbunden sind, wobei weiter zur anschließenden Umbildung der Stege zu dünnen, leicht voneinander trennbaren und beim Abtrennen gratarme und bruchraue Trennflächen bildenden Trennstegen das Metallfaserband einem Walkprozess unterworfen wird, bei welchem jeder Steg einer mehrfachen Biegeverformung um seine Längsachse derart unterworfen wird, dass sich im Bereich der Stege Anrisse durch Dauerbruch ausbilden und somit der Trennsteg entsteht.

Bei diesen Verfahrensschritten wird die Erfindung derart realisiert, dass, zur Bildung rechteckiger Metallfasern, die Kerbabstände größer als die Dicke des Blechbandes sind und mit der Kerbung auf den beiden so gebildeten, breiteren Außenflächen der späteren Metallfaser V-förmige, jeweils endseitig begrenzte Rillen eingewalzt werden, die beim Kerbwalzprozess die Axialführung von Ober- und Unterwalze unterstützen, wobei die endseitigen Begrenzungen der Rillen jeweils Ankerflächen der Metallfaser bilden.

Im Folgenden wird die Erfindung an einem in der Zeichnung dargestellten Ausführungsbeispiel näher erläutert; es zeigen:
- Fig. 1: eine einzelne Metallfaser, in perspektivischer Darstellung
- Fig. 2: einen Querschnitt längs der Linie A-A gemäß Figur 1,
- Fig. 3: einen Querschnitt längs einer Ankerlinie, nämlich der Linie B-B gemäß Figur 1,
- Fig. 4: die Detaildarstellung Z gemäß Figur 1,
- Fig. 5 bis 8: eine nicht zur Erfindung gehörende Ausführung in den Figuren 1 bis 4 entsprechender Darstellung.

Die in der Zeichnung dargestellte profilierte Metallfaser 1 besitzt einen im Wesentlichen rechteckigen Querschnitt und dient zur Stabilisierung, Verfestigung, Befestigung oder Verbindung von Materialien und Baustoffen wie Beton, Holz, Papier und dergleichen. Sie besteht insbesondere aus Stahl und kann, je nach Anwendungszweck, in nicht näher dargestellter Weise auch mit abgewinkelten Faserenden in Form einer Klammer ausgebildet sein.

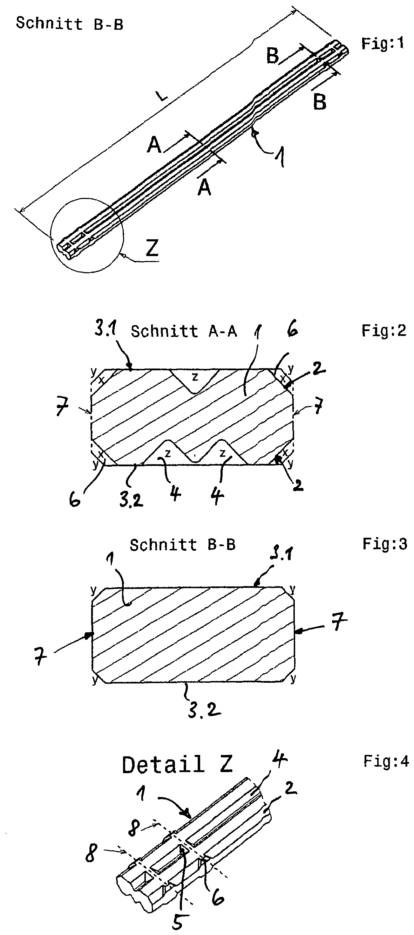

Die in Faserlängsrichtung verlaufenden Faserkanten der Faseraußenflächen sind in der Art einer Fase als schräg zu den Faseraußenflächen ausgerichtete Kantflächen 2 ausgebildet, wie sich insbesondere aus der Figur 2 ersehen lässt.

Die beiden breiteren Faseraußenflächen 3.1, 3.2 sind mit in Längsrichtung verlaufenden V-förmigen Rillen 4 versehen, die ihre Längsausdehnung begrenzende Endzonen 5 aufweisen. Des Weiteren sind die Kantflächen 2 mit Vorsprüngen 6 versehen, wobei diese Vorsprünge 6 Verankerungsköpfe und die Endzonen 5 der V-förmigen Rillen 4 Ankerflächen bilden, die gegenüber den zu stabilisierenden, verfestigenden bzw. befestigenden Materialien Wirkung entfalten. Die Vorsprünge 6, in Fig. 2 auch mit x bezeichnet, entstehen zunächst durch den Kerbprozess, können aber hinsichtlich ihrer Wirkfläche durch den Ritzprozess (y) verändert werden. Dies kann als "Feinverstellung" für die Verankerungswirkung der gesamten Faser angesehen werden. Die von den Endzonen 5 gebildeten Ankerflächen (in Fig. 2 mit z bezeichnet), die ebenfalls durch den Kerbprozess gebildet werden und in ihrer Größe durch die Kerbtiefe bestimmt sind, sind nach dem Kerbprozess nicht mehr veränderbar. Sie stellen eine gleichmäßigere Verankerung dar, da sie nur von dem mit höchster Präzision gefertigten Kerbwerkzeug bestimmt sind.

Die eine der breiteren Faseraußenflächen 3.1 weist, wie sich aus der Figur 2 ersehen lässt, eine V-förmige Rille 4 auf, während die ihr gegenüber liegende Faseraußenfläche 3.2 wenigstens zwei V-förmige Rillen 4 gleicher Größe aufweist. Hierbei ist die einzelne V-förmige Rille 4 auf der breiten Faseraußenfläche 3 mittig zur Fläche angeordnet.

Die zwei V-förmigen Rillen 4 auf der gegenüberliegenden breiten Faseraußenfläche 3.2 sind symmetrisch bzw. mittig bezüglich der breiten Faseraußenfläche 3.2 angeordnet und berühren sich in der Mitte bzw. können auch nahe beieinander liegen. Hierbei ist die Tiefe der V-förmigen Rillen 4 in der Regel so gewählt, dass sie im Bereich von 25 % bis 40 % der Metallfaserdicke liegt.

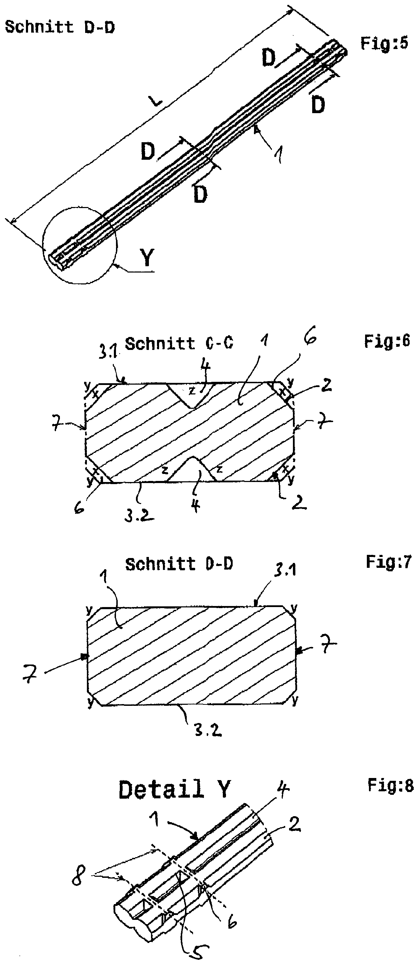

In einer nicht zur Erfindung gehörenden Ausgestaltung besteht, wie in den Fig. 5 - 8, insbesondere in Fig. 6 dargestellt, auch die Möglichkeit, dass beide breiteren Faseraußenflächen 3.1, 3.2 je eine V-förmige Rille 4 aufweisen, die sich gegenüberliegen und gleiche Größe besitzen sowie mittig zur Fläche angeordnet sind.

Die von den die V-förmigen Rillen 4 endseitig begrenzenden Endzonen 5 gebildeten Ankerflächen weisen eine feste, durch die Querschnittsform und Tiefe der V-förmigen Rille 4 bestimmte Größe auf, wie dies insbesondere aus der Figur 4 ersichtlich ist.

Das Verhältnis des Breitenmaßes zum Dickenmaß der Metallfaser 1 liegt vorteilhafterweise im Bereich zwischen 4:1 und 1,5:1; besonders hat sich hierbei ein Verhältnis bewährt, bei welchem das Breitenmaß und Dickenmaß der Metallfaser 1 bei etwa 2:1 liegt.

Wie sich insbesondere aus der Fig. 4 ergibt, liegen die von den Vorsprüngen 6 gebildeten Verankerungsköpfe und die von den Endzonen 5 gebildeten Ankerflächen in einer gemeinsamen, senkrecht zur Längsrichtung der Faser verlaufenden Ankerlinie 8.

Dabei kann jede Metallfaser eine oder mehrere, bevorzugt endseitig angeordnete Ankerlinien 8 aufweisen.

Zur Herstellung dieser Metallfasern 1 empfiehlt sich insbesondere ein Verfahren, bei welchem zunächst ein Blechband zur Formung der Metallfasern 1 beidseitig, gegenüberliegend gekerbt wird, wodurch Metallfaseradern ausgebildet werden. Diese sind zunächst noch durch Stege miteinander verbunden. Zur anschließenden Umbildung der Stege zu dünnen, leicht voneinander trennbaren und beim Abtrennen gratarme und bruchraue Trennflächen 7 bildenden Trennstegen wird das Metallfaserband einem Walkprozess unterworfen, bei welchem jeder Steg einer mehrfachen Biegeverformung um seine Längsachse unterworfen wird. Dadurch bilden sich im Bereich der Stege Anrisse durch Dauerbruch aus, so dass auf diese Weise ein Trennsteg entsteht. Zur Bildung rechteckiger Metallfasern 1 werden dann die Kerbabstände größer gewählt als die Dicke des Blechbandes. Mit der Kerbung werden auf den beiden so gebildeten, breiteren Außenflächen der späteren Metallfaser 1 V-förmigen Rillen 4 eingewalzt, die jeweils endseitig begrenzt sind. Diese Rillen 4 unterstützen beim Walzenprozess die Axialführung von Ober- und Unterwalze, wobei die endseitigen Begrenzungen der Rillen 4 die späteren Ankerflächen der Metallfaser bilden.

## Patentansprüche

1. Profilierte Metallfaser mit rechteckigem Querschnitt, auch mit abgewinkelten Faserenden in Form einer Klammer, zur Stabilisierung, Verfestigung, Befestigung oder Verbindung von Materialien und Baustoffen wie Beton, Holz, Papier und dergleichen, insbesondere aus Stahl, bei welcher die in Faserlängsrichtung verlaufenden Faserkanten der Faseraußenflächen in der Art einer Fase als schräg zu den Faseraußenflächen ausgerichtete Kantflächen (2) ausgebildet sind,
wobei die beiden breiteren Faseraußenflächen (3.1, 3.2) der rechteckigen Faser mit in Längsrichtung verlaufenden V-förmigen Rillen (4) versehen sind,
wobei die Kantflächen (2) mit Vorsprüngen (6) und die V-förmigen Rillen (4) mit ihre Längsausdehnung begrenzenden Endzonen (5) versehen sind,
wobei die Vorsprünge (6) Verankerungsköpfe und die Endzonen (5) Ankerflächen gegenüber den zu stabilisierenden, verfestigenden bzw. befestigenden Materialien bilden,
und wobei die eine der breiteren Faseraußenflächen (3.1) eine V-förmige Rille (4) und die ihr gegenüberliegende Faseraußenfläche (3.2) wenigstens zwei V-förmige Rillen (4) gleicher Größe aufweist, wobei die einzelne V-förmige Rille (4) auf der breiten Faseraußenfläche (3.1) mittig zur Fläche angeordnet ist und die zwei V-förmigen Rillen (4) auf der gegenüberliegenden breiten Faseraußenfläche (3.2) symmetrisch bzw. mittig bezüglich der breiten Faseraußenfläche (3.2) angeordnet sind und sich in der Mitte berühren bzw. nahe beieinander liegen, sodass die Rillen (4) bei einem Walzenprozess eines Blechbands zur Formung der Metallfaser die Axialführung von einer Ober- und Unterwalze unterstützen.

2. Metallfaser nach Anspruch 1, **dadurch gekennzeichnet, dass** die Vorsprünge (6) hinsichtlich ihrer Wirkfläche durch einen Ritzprozess während der Herstellung veränderbar sind.

3. Metallfaser nach den Ansprüchen 1 bis 2, **dadurch gekennzeichnet, dass** die Tiefe der V-förmigen Rillen (4) im Bereich von 25 - 40% der Metallfaserdicke liegt.

4. Metallfaser nach den Ansprüchen 1 bis 3, **dadurch gekennzeichnet, dass** die die V-förmigen Rillen (4) endseitig begrenzenden Ankerflächen eine feste, durch die Querschnittsform und Tiefe der V-förmigen Rillen (4) bestimmte Größe aufweisen.

5. Metallfaser nach den Ansprüchen 1 bis 4, **dadurch gekennzeichnet, dass** das Breitenmaß zum Dickenmaß der Metallfaser im Bereich von 4 : 1 und 1,5 : 1 liegt.

6. Metallfaser nach den Ansprüchen 1 bis 5, **dadurch gekennzeichnet, dass** die von den Vorsprüngen (6) gebildeten Verankerungsköpfe und die von den Endzonen (5) gebildeten Ankerflächen in einer gemeinsamen, senkrecht zur Längsrichtung der Faser verlaufenden Ankerlinie (8) liegen.

7. Metallfaser nach Anspruch 6, **dadurch gekennzeichnet, dass** jede Faser ein oder mehrere, bevorzugt endseitig angeordnete Ankerlinien (8) aufweist.

8. Verfahren zur Herstellung der profilierten Metallfaser nach einem der Ansprüche 1 bis 7, bei welchem zunächst ein Blechband zur Formung der Metallfasern beidseitig, gegenüberliegend gekerbt wird, wodurch Metallfaseradern ausgebildet werden, die zunächst noch durch Stege miteinander verbunden sind, wobei weiter zur anschließenden Umbildung der Stege zu dünnen, leicht voneinander trennbaren und beim Abtrennen gratarme und bruchrauhe Trennflächen (7) bildenden Trennstegen das Metallfaserband einem Walkprozess unterworfen wird, bei welchem jeder Steg einer mehrfachen Biegeverformung um seine Längsachse derart unterworfen wird, dass sich im Bereich der Stege Anrisse durch Dauerbruch ausbilden und somit der Trennsteg entsteht, **dadurch gekennzeichnet, dass**, zur Bildung rechteckiger Metallfasern, die Kerbabstände größer als die Dicke des Blechbandes sind und mit der Kerbung auf den beiden so gebildeten, breiteren Außenflächen (3.1, 3.2) der späteren Metallfaser V-förmige, jeweils endseitig begrenzte Rillen (4) eingewalzt werden, wobei die eine der breiteren Faseraußenflächen (3.1) eine V-förmige Rille (4) und die ihr gegenüberliegende Faseraußenfläche (3.2) wenigstens zwei V-förmige Rillen (4) gleicher Größe aufweist, wobei die einzelne V-förmige Rille (4) auf der breiten Faseraußenfläche (3.1) mittig zur Fläche angeordnet ist und die zwei V-förmigen Rillen (4) auf der gegenüberliegenden breiten Faseraußenfläche (3.2) symmetrisch bzw. mittig bezüglich der breiten Faseraußenfläche (3.2) angeordnet sind und sich in der Mitte berühren bzw. nahe beieinander liegen, wobei die Rillen (4) beim Walzenprozess die Axialführung von Ober- und Unterwalze unterstützen, wobei die endseitigen Begrenzungen der Rillen jeweils Ankerflächen der Metallfaser bilden.

9. Verfahren nach Anspruch 8, bei dem die in Faserlängsrichtung verlaufenden Faserkanten der Faseraußenflächen als schräg zu den Faseraußenflächen ausgerichtete Kantflächen (2) ausgebildet sind.

10. Verfahren nach Anspruch 9, bei dem die Kantflächen (2) mit Vorsprüngen versehen werden, welche Verankerungsköpfe gegenüber den zu stabilisierenden, verfestigenden bzw. befestigenden Materialien bilden.

11. Verfahren nach Anspruch 10, bei dem die Vorsprünge (6) hinsichtlich ihrer Wirkfläche durch einen Ritzprozess während der Herstellung verändert werden.

## Claims

1. A profiled metal fiber with rectangular cross-section, also with angled fiber ends in the form of a clamp, for stabilizing, consolidating, fastening or connecting materials and building materials such as concrete, wood, paper and similar, in particular made of steel, in which the fiber edges of the fiber outer surfaces extending in the longitudinal direction of the fiber are designed in the manner of a chamfer as edge surfaces (2) aligned obliquely to the fiber outer surfaces,
wherein the two wider outer fiber surfaces (3.1, 3.2) of the rectangular fiber are provided with longitudinally extending V-shaped grooves (4),
wherein the edge surfaces (2) are provided with protrusions (6) and the V-shaped grooves (4) are provided with end zones (5) limiting their longitudinal extent,
wherein the protrusions (6) form anchoring heads and the end zones (5) form anchoring surfaces with respect to the materials to be stabilized, consolidated or fastened,
and wherein one of the wider fiber outer surfaces (3.1) has a V-shaped groove (4) and the fiber outer surface (3.2) opposite thereto has at least two V-shaped grooves (4) of the same size, wherein the single V-shaped groove (4) on the wide fiber outer surface (3.1) is arranged centrally with respect to the surface and the two V-shaped grooves (4) on the opposite wide fiber outer surface (3.2) are arranged symmetrically or centrally with respect to the wide fiber outer surface (3.2) and are in contact or close to one another in the middle, such that the grooves (4) support the axial guidance of a top and bottom roll in a rolling process of a metal strip for forming the metal fiber.

2. The metal fiber according to claim 1, **characterized in that** the protrusions (6) are variable with respect to their effective area by a scoring process during production.

3. The metal fiber according to claims 1 to 2, **characterized in that** the depth of the V-shaped grooves (4) is in the area of 25 - 40% of the metal fiber thickness.

4. The metal fiber according to claims 1 to 3, **characterized in that** the anchor surfaces bounding the V-shaped grooves (4) at the ends have a fixed size determined by the cross-sectional shape and depth of the V-shaped grooves (4).

5. The metal fiber according to claims 1 to 4, **characterized in that** the width dimension to the thickness dimension of the metal fiber is in the area of 4 : 1 and 1.5 : 1.

6. The metal fiber according to claims 1 to 5, **characterized in that** the anchoring heads formed by the protrusions (6) and the anchoring surfaces formed by the end zones (5) lie in a common anchoring line (8) extending perpendicular to the longitudinal direction of the fiber.

7. The metal fiber according to claim 6, **characterized in that** each fiber has one or more, preferably endwise, anchor lines (8).

8. A method for the production of the profiled metal fiber according to any of claims 1 to 7, wherein first a sheet metal strip for forming the metal fibers is notched on both sides, opposite each other, whereby metal fiber veins are designed which are initially still connected to each other by ridges, wherein further for subsequently forming the ridges into thin, easily separable from one another and forming low-burr and fracture-rough separating surfaces (7) when separated, the metal fiber strip is subjected to a rolling process in which each ridge is subjected to multiple bending deformation about its longitudinal axis in such a way that incipient cracks form in the area of the ridges due to fatigue fracture and thus the separating ridge is formed, **characterized in that,** for the formation of rectangular metal fibers, the notch spacing is greater than the thickness of the sheet metal strip and, with the notching, V-shaped grooves (4) bounded in each case at the ends are rolled in on the two wider outer surfaces (3.1, 3.2) of the later metal fiber thus formed, wherein one of the wider fiber outer surfaces (3.1) has a V-shaped groove (4) and the fiber outer surface (3.2) opposite thereto has at least two V-shaped grooves (4) of the same size, wherein the single V-shaped groove (4) on the wide fiber outer surface (3.1) is arranged centrally with respect to the surface and the two V-shaped grooves (4) on the opposite wide fiber outer surface (3.2) are arranged symmetrically or centrally with respect to the wide fiber outer surface (3.2) and are in contact with one another or are close to one another in the center, wherein the grooves (4) support the axial guidance of the upper and lower rolls during the rolling process, wherein the end-side boundaries of the grooves form respective anchor surfaces of the metal fiber.

9. The method according to claim 8, wherein the fiber edges of the fiber outer surfaces extending in the longitudinal direction of the fibers are designed as edge surfaces (2) oriented obliquely to the fiber outer surfaces.

10. The method according to claim 9, wherein the edge surfaces (2) are provided with protrusions forming anchoring heads with respect to the materials to be stabilized, consolidated or fastened.

11. The method according to claim 10, wherein the protrusions (6) are changed with respect to their effective area by a scoring process during production.

## Revendications

1. Fibre métallique profilée comportant une section transversale rectangulaire, comportant également des extrémités de fibre coudées en forme de pince, pour la stabilisation, la solidification, la fixation ou la liaison de matériaux et matériaux de construction tels que du béton, du bois, du papier et similaires, en particulier constituée d'acier, dans laquelle les bords de fibre, s'étendant dans la direction longitudinale de fibre, des surfaces extérieures de fibre sont réalisés à la manière d'un chanfrein en tant que surfaces de bord (2) orientées obliquement par rapport aux surfaces extérieures de fibre,
dans laquelle les deux surfaces extérieures de fibre plus larges (3.1, 3.2) de la fibre rectangulaire sont pourvues de rainures en forme de V (4) s'étendant dans la direction longitudinale,
dans laquelle les surfaces de bord (2) sont pourvues de saillies (6) et les rainures en forme de V (4) sont pourvues de zones d'extrémité (5) délimitant leur étendue longitudinale,
dans laquelle les saillies (6) forment des têtes d'ancrage et les zones d'extrémité (5) forment des surfaces d'ancrage par rapport aux matériaux à stabiliser, à solidifier ou à fixer,
et dans laquelle l'une des surfaces extérieures de fibre plus larges (3.1) présente une rainure en forme de V (4) et la surface extérieure de fibre (3.2) opposée à celle-ci présente au moins deux rainures en forme de V (4) de même dimension, dans laquelle l'unique rainure en forme de V (4) est disposée sur la surface extérieure de fibre large (3.1) au centre de la surface et les deux rainures en forme de V (4) sont disposées sur la surface extérieure de fibre large (3.2) opposée de manière symétrique ou au centre par rapport à la surface extérieure de fibre large (3.2) et se touchent ou reposent l'une près de l'autre au centre, de sorte que, lors d'un processus de laminage d'une bande de tôle pour la formation de la fibre métallique, les rainures (4) assistent le guidage axial d'un rouleau supérieur et d'un rouleau inférieur.

2. Fibre métallique selon la revendication 1, **caractérisée en ce que** les saillies (6) peuvent être modifiées en ce qui concerne leur surface active par un processus de gravure pendant la fabrication.

3. Fibre métallique selon les revendications 1 à 2, **caractérisée en ce que** la profondeur des rainures en forme de V (4) se situe dans la plage de 25 à 40 % de l'épaisseur de fibre métallique.

4. Fibre métallique selon les revendications 1 à 3, **caractérisée en ce que** les surfaces d'ancrage délimitant les rainures en forme de V (4) côté extrémité présentent une dimension fixe déterminée par la forme en section transversale et la profondeur des rainures en forme de V (4).

5. Fibre métallique selon les revendications 1 à 4, **caractérisée en ce que** la dimension en largeur par rapport à la dimension en épaisseur de la fibre métallique se situe dans la plage de 4:1 et 1,5:1.

6. Fibre métallique selon les revendications 1 à 5, **caractérisée en ce que** les têtes d'ancrage formées par les saillies (6) et les surfaces d'ancrage formées par les zones d'extrémité (5) sont situées dans une ligne d'ancrage (8) commune s'étendant perpendiculairement à la direction longitudinale de la fibre.

7. Fibre métallique selon la revendication 6, **caractérisée en ce que** chaque fibre présente une ou plusieurs lignes d'ancrage (8), de préférence disposées côté extrémité.

8. Procédé de fabrication de la fibre métallique profilée selon l'une des revendications 1 à 7, dans lequel une bande de tôle est d'abord entaillée à l'opposé des deux côtés pour la formation de la fibre métallique, moyennant quoi des fils de fibre métallique sont réalisés, lesquels sont tout d'abord reliés entre eux par des nervures, dans lequel, pour la transformation subséquente des nervures en nervures de séparation fines, pouvant être séparées facilement les unes des autres et formant, lors de la séparation, des surfaces de séparation (7) peu tranchantes et rugueuses, la bande de fibre métallique est en outre soumise à un processus de foulage lors duquel chaque nervure est soumise à une déformation en flexion multiple autour de son axe longitudinal de telle sorte que des fissures se forment dans la région des nervures par rupture permanente et la nervure de séparation se forme ainsi, **caractérisé en ce que,** pour la formation de fibres métalliques rectangulaires, les espacements entre les entailles sont supérieurs à l'épaisseur de la bande de tôle et des rainures en forme de V (4) respectivement délimitées côté extrémité sont laminées avec l'entaillage sur les deux surfaces extérieures plus larges (3.1, 3.2) ainsi formées de la future fibre métallique, dans lequel l'une des surfaces extérieures de fibre plus larges (3.1) présente une rainure en forme de V (4) et la surface extérieure de fibre (3.2) opposée à celle-ci présente au moins deux rainures en forme de V (4) de même dimension, dans lequel l'unique rainure en forme de V (4) est disposée sur la surface extérieure de fibre large (3.1) au centre de la surface et les deux rainures en forme de V (4) sont disposées sur la surface extérieure de fibre large (3.2) opposée de manière symétrique ou au centre par rapport à la surface extérieure de fibre large (3.2) et se touchent ou reposent l'une près de l'autre au centre, dans lequel, lors du processus de laminage, les rainures (4) assistent le guidage axial d'un rouleau supérieur et d'un rouleau inférieur, dans lequel les délimitations côté extrémité des rainures forment respectivement des surfaces d'ancrage de la fibre métallique.

9. Procédé selon la revendication 8, dans lequel les bords de fibre, s'étendant dans la direction longitudinale de fibre, des surfaces extérieures de fibre sont réalisés sous la forme de surfaces de bord (2) orientées obliquement par rapport aux surfaces extérieures de fibre.

10. Procédé selon la revendication 9, dans lequel les surfaces de bord (2) sont pourvues de saillies qui forment des têtes d'ancrage par rapport aux matériaux à stabiliser, à solidifier ou à fixer.

11. Procédé selon la revendication 10, dans lequel les saillies (6) sont modifiées en ce qui concerne leur surface active par un processus de gravure pendant la fabrication.
